(19) Europäisches Patentamt
European Patent Office
Office européen des brevets

(11) **EP 3 358 129 A1**

(12) **DEMANDE DE BREVET EUROPEEN**

(43) Date de publication:
**08.08.2018 Bulletin 2018/32**

(51) Int Cl.:
**E21B 41/00** (2006.01)     **E21B 43/16** (2006.01)
**E21B 43/20** (2006.01)

(21) Numéro de dépôt: **18305032.7**

(22) Date de dépôt: **16.01.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(30) Priorité: **03.02.2017   FR 1750940**

(71) Demandeur: **IFP Energies nouvelles**
**92852 Rueil-Malmaison Cedex (FR)**

(72) Inventeurs:
• **GASSARA, Omar**
  **92000 NANTERRE (FR)**
• **DOUARCHE, Frederic**
  **92500 RUEIL MALMAISON (FR)**
• **BRACONNIER, Benjamin**
  **92160 ANTONY (FR)**
• **BOURBIAUX, Bernard**
  **92500 RUEIL MALMAISON (FR)**

(54) **PROCEDE D'EXPLOITATION D'UN GISEMENT D'HYDROCARBURES PAR INJECTION D'UN GAZ SOUS FORME DE MOUSSE**

(57)    - Procédé d'exploitation d'un gisement d'hydrocarbures par injection de gaz sous forme de mousse, comprenant une étape de détermination d'un modèle de déplacement de la mousse, ce modèle étant fonction d'un facteur de réduction de mobilité du gaz optimal et d'au moins une fonction d'interpolation dépendante de la saturation en eau.
- On détermine le facteur de réduction de mobilité optimal du gaz et on calibre les constantes de la fonction d'interpolation relative à la saturation en eau à partir d'une pluralité de mesures de viscosité apparente pour différentes valeurs de la qualité de la mousse, et au moyen d'un modèle à lamelles permettant de relier la densité de lamelles en fonction de la saturation en eau.
- Application notamment à l'exploration et à l'exploitation pétrolière.

EP 3 358 129 A1

## Description

La présente invention concerne le domaine de l'exploitation d'un fluide contenu dans une formation souterraine, plus particulièrement la récupération assistée d'un fluide, tel qu'un fluide hydrocarboné, par injection de mousse.

L'exploitation d'un réservoir pétrolier par récupération primaire consiste à extraire, via un puits dit de production, le pétrole présent du réservoir par l'effet de surpression régnant naturellement au sein du réservoir. Cette récupération primaire ne permet d'accéder qu'à une faible quantité du pétrole contenu dans le réservoir, de l'ordre de 10 à 15% tout au plus.

Pour permettre de poursuivre l'extraction du pétrole, des méthodes secondaires de production sont employées, quand la pression du réservoir devient insuffisante pour déplacer le pétrole encore en place. Notamment, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le ou les puits de production. Une technique usuelle dans ce cadre est l'injection d'eau (désignée également par le terme anglais « waterflooding »), dans laquelle de grands volumes d'eau sont injectés sous pression dans le réservoir via des puits injecteurs. L'eau injectée entraîne une partie du pétrole qu'elle rencontre et le pousse vers un ou plusieurs puits producteurs. Les méthodes secondaires de production telles que l'injection d'eau ne permettent toutefois d'extraire qu'une partie relativement faible des hydrocarbures en place (typiquement de l'ordre de 30%). Ce balayage partiel est dû notamment au piégeage de l'huile par les forces capillaires, aux différences de viscosité et de densité existant entre le fluide injecté et les hydrocarbures en place, ainsi qu'à des hétérogénéités à des échelles micro- ou macroscopiques (échelle des pores et aussi échelle du réservoir).

Pour essayer de récupérer le reste du pétrole, qui demeure dans les formations souterraines à l'issue de la mise en oeuvre des méthodes primaires et secondaires de production, il existe différentes techniques dites de récupération assistée (connue sous l'acronyme « EOR », correspondant à « *Enhanced Oil Recovery* »). Parmi ces techniques, on peut citer des techniques s'apparentant à l'injection d'eau précitée, mais employant une eau comprenant des additifs tels que, par exemple, des agents tensio-actifs solubles dans l'eau (on parle alors de « *surfactant flooding* »). L'emploi de tels agents tensio-actifs induit notamment une diminution de la tension interfaciale eau/pétrole, ce qui est propre à assurer un entraînement plus efficace du pétrole piégé au niveau des constrictions de pores.

On connaît également la récupération assistée par injection de gaz, miscibles ou non (gaz naturel, azote ou $CO_2$). Cette technique permet de maintenir la pression dans le réservoir pétrolier au cours de son exploitation, mais peut aussi permettre, dans le cas de gaz miscibles, de mobiliser les hydrocarbures en place et ainsi d'en améliorer le débit. Un gaz couramment utilisé est le dioxyde de carbone lorsqu'il est disponible à bas coût.

On connaît aussi des techniques alternatives reposant sur une injection de mousse dans le réservoir pétrolier. Cette mousse résulte du mélange intime de gaz et d'une solution d'un additif tensio-actif, ce dernier étant désigné « agent moussant » dans la suite. En raison de sa viscosité apparente élevée, la mousse est considérée comme une alternative au gaz comme fluide d'injection dans les réservoirs d'hydrocarbures. La mobilité de la mousse est ainsi réduite par rapport au gaz qui, lui, a tendance à ségréger et à percer rapidement aux puits producteurs, notamment dans les réservoirs hétérogènes et/ou épais. La récupération assistée par injection de mousse est particulièrement attractive car elle requiert l'injection de volumes plus petits que pour d'autres procédés de récupération assistée à base de fluides non moussants.

## Etat de la technique

Les documents suivants seront cités dans la suite de la description :

Alvarez, J. M., Rivas, H. J. and Rossen, W. R.. 2001. Unified Model for Steady-State Foam Behavior at High and Low Foam Qualities. SPE Journal, 6(3):325-333.

Boeije, C. S. and Rossen, W. R..2015. Fitting Foam-Simulation-Model Parameters to Data: I. Coinjection of Gas and Liquid. SPE Reservoir Evaluation & Engineering, 18(2), 264-272.

Bretherton F. P. 1961. The motion of long bubbles in tubes. Journal of Fluid Mechanics, 10(2):166.

Farajzadeh, R., Lotfollahi, M., Eftekhari, A.A., Rossen, W.R. and Hirasaki, G.J., 2015. Effect of Permeability on Implicit-Texture Foam Model Parameters and the Limiting Capillary Pressure. Energy & Fuels 29, 3011-3018 (ACS Publications).

Hirasaki, G. J. and Lawson J. B. 1985. Mechanisms of foam flow in porous media: apparent viscosity in smooth capillaries. SPE Journal, 25(2):176-190.

Kapetas, L., Vincent-Bonnieu, S., Farajzadeh, R., Eftekhari, A.A., Mohd-Shafian, S.R., Kamarul Bahrim, R.Z. and Rossen, W.R., 2015. Effect of Permeability on Foam-Model Parameters - An Integrated Approach from Coreflood Experiments through to Foam Diversion Calculations. 18th European Symposium on IOR, Dresden, 14-16 April.

Lotfollahi, M., Farajzadeh, R., Delshad, M., Varavei, A. and Rossen, W. R. 2016. Comparison of Implicit-Texture and Population-Balance Foam Models. Journal of Natural Gas Science and Engineering, 31, 184-197.

Ma, K., Lopez-Salinas, J.L., Puerto, M.C., Miller, C.A., Biswal, S.L., Hirasaki, G.J., 2013. Estimation of Parameters for the Simulation of Foam Flow through Porous Media. Part 1: The Dry-Out Effect. Energy & Fuels 27, 2363-2375 (ACS Publications).

Zeng, Y., Muthuswamy, A., Ma, K., Le, W. Farajzadeh, R., Puerto, M., Vincent-Bonnieu, S., Eftekhari, A. A., Wang, Y., Da, C., Joyce, J. C., Biswal, S. L. and Hirasaki, G. J. 2016. Insights on Foam Transport From a Texture-Implicit Local-Equilibrium Model with an Improved Parameter Estimation Algorithm. Industrial & Engineering Chemistry Research, 55(28):7819-7829, 2016.

L'exploitation pétrolière d'un gisement consiste à déterminer les zones du gisement présentant le meilleur potentiel pétrolier, à définir des schémas d'exploitation pour ces zones (afin de définir le type de récupération, le nombre et les positions des puits d'exploitation permettant une récupération d'hydrocarbures optimale), à forer des puits d'exploitation et, de façon générale, à mettre en place les infrastructures de production nécessaires au développement du gisement.

Dans le cas d'une récupération assistée par injection de mousse, la définition d'un schéma d'exploitation d'un réservoir pétrolier peut nécessiter de simuler numériquement, de la façon la plus réaliste possible, les écoulements en présence de mousse dans le réservoir considéré. Une telle simulation est réalisée à l'aide d'un simulateur d'écoulement comprenant un modèle de déplacement de la mousse.

Un tel modèle peut nécessiter d'évaluer les performances de la mousse en termes de réduction de mobilité. En général, cette estimation passe par la réalisation d'expériences de laboratoire consistant à mesurer les pertes de charge lors de déplacements de mousse d'une part, d'eau et de gaz non moussant d'autre part dans un échantillon du réservoir pétrolier. Puis, ce modèle de déplacement de la mousse, représentatif des écoulements à l'échelle du laboratoire, est calibré à l'échelle du réservoir avant de réaliser les simulations numériques des écoulements, afin de prédire le bénéfice procuré par l'injection de la mousse en termes d'amélioration de l'efficacité de déplacement des fluides en place.

Les modèles de déplacement de la mousse utilisés par l'industrie sont des modèles relativement simples qui, sous les conditions d'existence de la mousse, simulent uniquement les effets de la mousse en termes de réduction de mobilité et non les processus de génération-destruction de la mousse. De façon générale, les modèles de déplacement de la mousse dépendent non linéairement de nombreux paramètres (constantes de calibration). La détermination des paramètres de ces modèles passe donc par la résolution d'un problème inverse non linéaire. Toutefois, la complexité du déplacement d'une mousse dans un milieu confiné que constitue tout milieu poreux naturel rend la calibration et la modélisation difficile car le grand nombre de paramètres influençant la mousse peut conduire à des indéterminations (solutions multiples).

On connaît les approches proposées dans les documents (Ma et al., 2013 ; Boeije and Rossen 2015; Zeng et al. 2016) qui consistent à déterminer simultanément certains paramètres du modèle de déplacement de la mousse par une approche graphique, complétée éventuellement par un ajustement numérique.

On connaît également les techniques proposées dans les documents (Farajzadeh et al. 2015 ; Lotfollahi et al. 2016) qui consistent à déterminer les paramètres inconnus (constantes de calibration) du modèle de déplacement de la mousse par une approche numérique de moindres carrés itérative. Toutefois, le problème posé étant non linéaire vis-à-vis de ces inconnues, il y a non unicité de la solution, ou autrement dit, les paramètres ainsi déterminés sont une solution parmi d'autres possibles (cf. par exemple Kapetas et al., 2015).

On connaît également la demande de brevet FR 16/57393 (numéro de dépôt) qui décrit la détermination des paramètres du modèle de déplacement de la mousse de manière séquentielle, à partir de différents jeux de données expérimentales acquises sur divers systèmes roches-fluides-mousse caractérisés notamment par diverses qualités de mousse, diverses concentrations d'agent moussant, diverses saturations en huile. Le caractère séquentiel de l'ajustement des paramètres du modèle de déplacement de la mousse permet de minimiser les ajustements numériques, au contraire de procédés réalisant un ajustement global, tout en essayant d'extraire le maximum d'informations sur le comportement dynamique de la mousse à partir des données expérimentales. Le procédé fournit alors un modèle de déplacement de la mousse, qualifié d'empirique, reproduisant fidèlement les données expérimentales.

La présente invention décrit une méthode de calibration du modèle de déplacement de la mousse destiné à la simulation de réservoir tenant compte de lois physiques relatives aux mousses et à leurs propriétés d'écoulement.

Plus précisément, la présente invention décrit l'utilisation d'un modèle à lamelles comme intermédiaire pour calibrer le modèle de déplacement de la mousse à partir des données expérimentales. De cette manière, la calibration étant basée sur des lois physiques, le modèle de déplacement de la mousse calibré est plus réaliste et permet, au moyen d'un simulateur de réservoir, des prévisions de production plus fiables. Le procédé selon l'invention contribue ainsi à une meilleure évaluation des procédés de récupération assistée à base de mousse pour récupérer l'huile du réservoir considéré.

**Le procédé selon l'invention**

Ainsi, la présente invention concerne un procédé pour l'exploitation d'une formation souterraine comportant des hydrocarbures, au moyen d'une injection d'une solution aqueuse comprenant un gaz sous forme de mousse et d'un simulateur d'écoulement reposant sur un modèle de déplacement dudit gaz sous forme de mousse, ledit modèle de déplacement étant fonction d'un facteur de réduction de mobilité dudit gaz optimal et d'au moins une fonction d'interpolation dudit facteur de réduction de mobilité optimal, ladite fonction d'interpolation étant fonction au moins de la saturation en eau et d'au moins une constante.

Selon l'invention, à partir d'au moins un échantillon de ladite formation, et de mesures de perméabilité relative conventionnelle à la phase aqueuse et de mesures de perméabilité relative conventionnelle au gaz :

A- on détermine au moins ledit facteur de réduction de mobilité dudit gaz optimal et ladite constante de ladite fonction d'interpolation selon au moins les étapes suivantes :

i. on réalise une injection à vitesse totale constante dans ledit échantillon dudit gaz sous forme de mousse pour pluralité de valeurs de la qualité de la mousse, et on mesure une viscosité apparente pour chacune desdites valeurs de la qualité de la mousse ;
ii. à partir desdites mesures de perméabilités relatives conventionnelles et desdites mesures de viscosité apparente pour la pluralité de valeurs de la qualité de la mousse, on détermine une saturation en eau pour chacune desdites valeurs de la qualité de la mousse ;
iii. à partir d'un modèle à lamelles fonction de ladite saturation en eau et desdites mesures de perméabilité relative conventionnelle au gaz et à ladite phase aqueuse, on détermine une valeur de la texture de la mousse pour chacune desdites valeurs la qualité de la mousse ;
iv. à partir desdites valeurs de texture, on détermine au moins ledit facteur de réduction de mobilité dudit gaz optimal et ladite constante de ladite fonction d'interpolation dudit facteur de réduction de mobilité optimal ;

B- à partir dudit modèle de déplacement et dudit simulateur d'écoulement, on détermine un schéma d'exploitation optimal dudit gisement et on exploite lesdits hydrocarbures.

Selon une mise en oeuvre de l'invention, on peut déterminer ladite viscosité apparente relative à une valeur de la qualité de la mousse à partir d'une mesure de perte de charge dans ledit échantillon pour ladite valeur de la qualité de la mousse.

Selon un mode de réalisation de l'invention, ledit modèle à lamelles peut consister en une fonction reliant la texture de la mousse à la saturation en eau selon une formule du type:

$$C_f \, n_f = \left[ \frac{1-f_g}{f_g} \frac{k_{rg\,max}\left(1-\overline{S_w}\right)^{\alpha_g}}{k_{rw\,max}\,\overline{S_w}^{\alpha_w}} \mu_w - \mu_g \right] \left( \frac{f_g u_t}{\phi S_g} \right)^{1/3}$$

où $f_g$ est la qualité de la mousse, $\mu_w$ la viscosité de la phase aqueuse, $\mu_g$ la vitesse de la phase gazeuse sous forme continue, $u_t$ est la vitesse totale du gaz et de la solution, $C_f$ une constante pour le système roche-fluides considéré, $k_{rw\,max}$ est la valeur maximale de la perméabilité relative à l'eau, $k_{rg\,max}$ est la valeur maximale de la perméabilité relative au gaz, $S_g$ est la saturation en gaz, $\phi$ est la porosité, $\alpha_w$ est l'exposant de la fonction puissance représentative desdites mesures de perméabilité relative à l'eau, et $\alpha_g$ est l'exposant de la fonction puissance représentative desdites mesures de perméabilité relative au gaz, et $\overline{S_w}$ est la saturation en eau normée.

Selon une mise en oeuvre de l'invention, ledit modèle de déplacement de la mousse peut être en sus fonction d'au moins une fonction d'interpolation $F_k$ dépendant d'un paramètre $V_k$ différent de la saturation en eau, et dans lequel préalablement à l'étape B) et pour chacune desdites fonctions d'interpolation $F_k$, on réitère les étapes i) à iii) pour différentes valeurs du paramètre $V_k$ de ladite fonction d'interpolation $F_k$, et on détermine les constantes relatives à ladite fonction d'interpolation $F_k$ à partir dudit facteur de réduction de mobilité optimal et d'un facteur de réduction de mobilité relatif à ladite fonction d'interpolation

$F_k$.

Préférentiellement, ledit paramètre $V_k$ peut être choisi parmi une concentration en agent moussant, une saturation en huile, et un débit de gaz.

Selon une mise en oeuvre de l'invention, ledit facteur de réduction de mobilité $M_{\text{mod}}^{k}$ relatif à la fonction $F_k$ peut s'écrire selon une formule du type :

$$F_k(V_k) = \frac{M_{\text{mod}}^{k} - 1}{M_{\text{mod}}^{opt} - 1}$$

où $M_{\text{mod}}^{opt}$ est ledit facteur de réduction de mobilité optimal.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

La Figure 1 présente l'évolution de la saturation en eau et de la texture normée en fonction de la qualité de la mousse.
La Figure 2 présente l'évolution de la texture normée en fonction de la saturation en eau.

**Description détaillée du procédé**

Les définitions suivantes sont utilisées :

- mousse : il s'agit d'une phase dispersée dans une autre phase par l'adjonction d'un agent moussant dans l'une des deux phases. L'une des phases peut être une solution aqueuse et l'autre phase est un gaz, tel que du gaz naturel, de l'azote ou du $CO_2$. L'écoulement de la mousse dans un milieu poreux est assimilable macroscopiquement (à l'échelle d'un échantillon tel qu'une carotte) à l'écoulement d'une phase homogène unique obéissant à la loi de Darcy monophasique, mais dont la viscosité, appelée « viscosité apparente » ci-après, est bien supérieure (de l'ordre de 100 à 1000 fois plus, voire plus encore) à celle du gaz qui la constitue pour l'essentiel
- modèle à lamelles : aussi connu sous le nom de modèle à bulles, il s'agit d'un modèle dynamique basée sur une représentation discontinue de la mousse, plus précisément comme une succession de lamelles (ou bulles) dont la densité volumique (nombre de lamelles ou bulles par unité de volume) détermine la réduction de mobilité de la mousse. Les modèles à lamelles prédisent les effets de la mousse en termes de réduction de mobilité et décrivent également les mécanismes de génération et distribution des lamelles au sein des milieux poreux. Ainsi, la variable de ces modèles à lamelles est la densité de lamelles, et non la saturation comme dans les modèles de réservoir à usage industriel classique.
- qualité de la mousse : il s'agit du rapport entre le débit de gaz $u_g$ sur le débit total solution + gaz. Dans le cas où la solution est une solution aqueuse, injectée selon un débit $u_w$, on peut écrire la qualité de la mousse $f_g$ sous la forme :

$$f_g = \frac{u_g}{(u_g + u_w)}$$

Ainsi définis, les débits respectifs de la solution et du gaz déterminent une valeur $f_g$ de la qualité de la mousse.

De façon générale, l'un des objets de l'invention concerne un procédé d'exploitation d'une formation souterraine comportant des hydrocarbures, au moyen d'une injection d'une solution aqueuse comprenant un gaz sous forme de mousse, et notamment la détermination d'un schéma d'exploitation des hydrocarbures de la formation souterraine étudiée. En particulier, le procédé selon l'invention vise à déterminer les paramètres d'un modèle de déplacement du gaz sous forme de mousse.

Le procédé selon l'invention requiert de disposer de :

- un échantillon de la formation souterraine étudiée, prélevé par carottage in situ par exemple ;

- un simulateur d'écoulement reposant sur un modèle de déplacement du gaz sous forme de mousse (cf. ci-dessous) ;

- de mesures de perméabilités relatives conventionnelles au gaz sous forme non moussante et de mesures de perméabilités relatives conventionnelles à la phase aqueuse : il peut s'agir de mesures réalisées expressément pour le besoin du procédé selon l'invention (le spécialiste a parfaite connaissance de la manière de conduire de telles expériences de laboratoire), mais il peut également s'agir de courbes pré-établies, ou encore de fonctions analytiques calibrées à partir de corrélations bien connues du spécialiste.

Le procédé selon l'invention requiert de disposer d'un simulateur d'écoulement comportant un modèle de déplacement de la mousse. Selon l'invention, le modèle de déplacement de la mousse repose sur l'hypothèse que le gaz présent sous forme de mousse voit sa mobilité réduite d'un facteur donné dans des conditions fixées de formation et d'écoulement de la mousse. La formulation d'un tel modèle, utilisée par de nombreux simulateurs d'écoulement, consiste en une modification des seules perméabilités relatives au gaz lorsque le gaz est présent sous forme de mousse, ce qui, pour une saturation en gaz $S_g$ donnée, s'exprime selon une formule du type :

$$k_{rg}^{FO}(S_g) = FM \, k_{rg}(S_g) \qquad\qquad (1)$$

où $k_{rg}^{FO}(S_g)$ est la perméabilité relative au gaz sous forme de mousse, qu'on exprime comme le produit d'une fonction $FM$ par la perméabilité relative au gaz non moussant $k_{rg}(S_g)$ pour la même valeur de saturation en gaz $S_g$ (notée plus loin $S_g^{FO}$). Une hypothèse sous-jacente aux modèles de mousse actuels est que la perméabilité relative à l'eau (ou au liquide par extension) est supposée inchangée, que le gaz soit présent sous forme de phase continue ou sous forme de mousse. Dans cette hypothèse, la fonctionnelle de réduction de mobilité du gaz, notée $FM$ par la suite, s'exprime selon une formule du type :

$$FM = \frac{1}{1 + \left(M_{mod}^{opt} - 1\right) * \prod_k F_k(V_k)} \qquad\qquad (2)$$

où :

- $M_{mod}^{opt}$ est le facteur optimal de réduction de mobilité, c'est-à-dire le rapport des perméabilités relatives au gaz ($k_{rg}$) et à la mousse $\left(k_{rg}^{FO}\right)$ dans des conditions optimales pour réduire la mobilité du gaz, c'est-à-dire les conditions dans lesquelles les termes $F_k(V_k)$ définis ci-dessous valent 1, soit :

$$M_{mod}^{opt} = \frac{k_{rg}\left(S_{g,opt}^{FO}\right)}{k_{rg}^{FO}\left(S_{g,opt}^{FO}\right)} = \frac{1}{FM_{opt}} \qquad\qquad (3)$$

- les termes $F_k(V_k)$ (avec k égal ou supérieur à 1) sont les valeurs des fonctions $F_k$ d'interpolation du facteur de réduction de mobilité entre la valeur $M_{mod}^{opt}$ et 1, qui dépendent chacune d'un paramètre $V_k$ relatif à au moins une caractéristique de la mousse, et qui font intervenir un certain nombre de constantes de calibration à calibrer comme expliqué ci-après.

Selon l'invention, le modèle de déplacement de la mousse comprend au moins une fonction d'interpolation (classiquement notée $F_2$) dépendant d'un paramètre relatif (noté $V_2$) correspondant à la saturation en eau $S_w$. Selon une mise en oeuvre de l'invention, la fonction d'interpolation $F_2$ s'écrit selon une formule du type :

$$F_2 = \left[ 0.5 + \frac{\arctan[\theta_w(S_w - S_w^*)]}{\pi} \right] \qquad (4)$$

Selon cette formulation, les constantes du modèle de déplacement de la mousse sont le facteur de réduction de mobilité

optimal $M_{\mathrm{mod}}^{opt}$ tel que défini selon l'équation (2), la constante $\theta_w$ qui régit la transition (en fonction de la saturation en eau) entre les états moussant et non moussant et la constante $S_w^*$ qui représente la saturation en eau de transition entre états moussants stable et instable.

Selon un mode de mise en oeuvre de l'invention, la fonctionnelle de réduction de mobilité du gaz, notée *FM*, comporte quatre fonctions d'interpolation $F_k(V_k)$ et chacune de ces fonctions comporte deux constantes à calibrer à partir de données expérimentales. Selon un mode de mise en oeuvre de l'invention dans lequel la fonctionnelle de réduction de mobilité du gaz comporte quatre fonctions d'interpolation $F_k(V_k)$, on définit :

- la fonction d'interpolation $F_1$ relative au paramètre $V_1 = C_s^w$ (concentration en agent moussant $C_s^w$ ) par une formule du type :

$$F_1 = \left( \frac{Min(C_s^w, C_s^{w-ref})}{C_s^{w-ref}} \right)^{e_s} \qquad (5)$$

et pour laquelle les constantes à calibrer sont l'exposant $e_s$ et la constante $C_s^{w-ref}$ qui correspond à la concentration en agent moussant dans des conditions optimales de référence ;
- la fonction d'interpolation $F_2$ relative au paramètre $V_2 = S_w$ (saturation en eau), telle que définie ci-dessus (cf équation (4) notamment) ;
- la fonction d'interpolation $F_3$ relative au paramètre $V_3 = S_o$ (saturation en huile) par une formule du type :

$$F_3 = \left( \frac{Max[0; S_o^* - S_o]}{S_o^*} \right)^{e_o} \qquad (6)$$

où $S_o^*$ est la saturation en huile au-delà de laquelle la mousse perd toutes ses facultés à réduire la mobilité du gaz, et l'exposant $e_o$ est une constante à déterminer ;
- la fonction d'interpolation $F_4$ relative au paramètre $V_4 = N_c$ (relié au débit de gaz) et définie par une formule du type :

$$F_4 = \left( \frac{N_c^*}{Max(N_c, N_c^*)} \right)^{e_c} \qquad (7)$$

où :

- $N_c$ est un nombre sans dimension exprimant le rapport entre forces visqueuses (liées à l'écoulement du gaz) et forces capillaires à l'échelle locale, lequel rapport peut, par exemple, être défini selon une formule du type

$$N_c = \frac{\mu_g u_g}{\phi S_g \sigma_{wg}(C_s^w)} = \frac{\mu_g f_g u_t}{\phi S_g \sigma_{wg}(C_s^w)}$$

les variables intervenant dans le calcul de $N_c$ étant la porosité $\phi$ et la saturation en gaz $S_g$, la qualité de la mousse $f_g$, la vitesse d'écoulement $u_t$ (vitesse totale des deux phases constituant la mousse), la tension interfaciale eau-gaz $\sigma_{gw}$ (qui est fonction de la concentration en agent moussant $C_s^w$ ( de la phase aqueuse), ainsi que la viscosité du gaz $\mu_g$. L'exposant $e_c$ peut être fixé a priori, par exemple à partir d'un modèle physique à lamelles, ou bien faire l'objet d'une calibration.

- $N_c^*$ est la valeur de référence du nombre capillaire $N_c$ calculée pour le gradient de pression de référence (égal au gradient minimal appliqué $\nabla P_{\min}$ permettant de générer de la mousse en milieu poreux), c'est-à-dire encore pour la qualité minimale permettant de générer la mousse soit :

$$N_c^* = \frac{\mu_g f_g^{\min} u_t}{\phi S_g (f_g^{\min}) \sigma_{wg} (C_s^w)}.$$

Selon un mode de mise en oeuvre de l'invention dans lequel la concentration en agent moussant est invariante, la fonction $F_4$ peut également s'écrire sous la forme suivante :

$$F_4 = \left(\frac{N_c^*}{Max(N_c, N_c^*)}\right)^{e_c} = \left(\frac{\frac{f_g^{\min}}{S_g(f_g^{\min})}}{Max\left[\frac{f_g}{S_g(f_g)}, \frac{f_g^{\min}}{S_g(f_g^{\min})}\right]}\right)^{e_c}.$$

De manière générale, la présente invention vise à déterminer de manière fiable, en se reposant sur des considérations physiques, les paramètres d'un modèle de déplacement de la mousse fonction d'un facteur de réduction de mobilité du gaz optimal et d'au moins une fonction d'interpolation du facteur de réduction de mobilité optimal relative à la saturation en eau.

Selon une mise en oeuvre l'invention, sont au moins déterminés les paramètres suivants :

- le facteur de réduction de la mobilité du gaz optimal $M_{\mod}^{opt}$ selon l'équation (2) ;

- les constantes de calibration $\theta_w$ et $S_w^*$, de la fonction $F_2$ (équation (4)).

Selon un mode de mise en oeuvre de l'invention dans lequel la fonctionnelle $FM$ définie dans l'équation (2) fait intervenir les fonctions d'interpolation $F_1$, $F_2$, $F_3$ et $F_4$ définies aux équations (4) à (7), on détermine le modèle de déplacement de la mousse en calibrant le facteur de réduction de mobilité optimal $M_{\mod}^{opt}$ (cf. équation (2)) et les constantes de la fonction d'interpolation $F_2$ (c'est-à-dire les constantes $\theta_w$ et $S_w^*$ de l'équation (4)) pour des valeurs de paramètres des fonctions $F_1$, $F_3$ et $F_4$ données, c'est-à-dire pour une concentration en agent moussant donnée, pour une saturation en huile donnée, et pour un débit de gaz donné.

Le procédé selon l'invention comporte au moins les étapes suivantes :

**1. Mesures de viscosité apparente en fonction de la qualité de la mousse**

**2. Détermination de la saturation en eau en fonction de la qualité de la mousse**

**3. Détermination de la densité de bulles en fonction de la saturation en eau**

**4. Détermination des paramètres du modèle de déplacement de la mousse**

**5. Exploitation des hydrocarbures de la formation**

Les différentes étapes du procédé selon l'invention sont détaillées ci-après.

Ces étapes sont appliquées pour une concentration en agent moussant donnée (de préférence élevée) et en l'absence d'huile, c'est-à-dire dans des conditions optimales assurant une performance optimale de la mousse (quantifiée par le facteur de réduction de mobilité optimal $M_{mod}^{opt}$ dans l'équation (2)). On détermine alors au moins le facteur de réduction de mobilité optimal, ainsi que les constantes de calibration de la fonction d'interpolation relative à la saturation en eau.

Selon une mise en oeuvre du procédé selon l'invention, on réitère les étapes 1 à 3, par exemple pour diverses concentrations en agent moussant et/ou pour diverses saturations en huile et/ou pour divers débits de gaz, afin de déterminer en sus les constantes relatives aux fonctions d'interpolation relatives aux autres paramètres que la saturation en eau, telles que par exemple les constantes impliquées dans les équations (5), (6) et (7).

Les étapes 2 à 5 peuvent être mises en oeuvre numériquement au moyen d'un ordinateur.

## 1. Mesures de viscosité apparente en fonction de la qualité de la mousse

Au cours de cette étape, on réalise des expériences de laboratoire afin de déterminer une valeur de viscosité apparente pour différentes valeurs de la qualité de la mousse. Plus précisément, au cours de cette étape, on réalise une injection, dans un échantillon de roche provenant du réservoir géologique étudié, d'une mousse pour différentes valeurs de qualité de la mousse, et on mesure une perte de charge pour chacune des valeurs de la qualité de la mousse. Puis à partir de ces mesures de pertes de charges, on détermine une valeur de viscosité apparente pour chacune des valeurs de la qualité de la mousse.

Selon une mise en oeuvre de l'invention, l'agent moussant choisi pour la mise en oeuvre de l'invention est dissout dans une solution aqueuse à une concentration fixée, de l'ordre du g/l par exemple. La solution ainsi préparée et le gaz (par exemple du $CO_2$) sont injectés dans l'échantillon de roche. Les injections sont réalisées pour différentes valeurs de la qualité de la mousse. Selon une mise en oeuvre de l'invention, on fait varier la qualité de la mousse $f_g$ à débit total (gaz + solution) fixé, et on mesure une perte de charge (soit différence de pression entre l'amont et l'aval de l'échantillon de de roche considéré) pour chaque valeur de qualité de la mousse $f_g$. A partir des mesures de perte de charge, on détermine, pour chacune des valeurs de la qualité de la mousse $f_g$, une viscosité apparente $\mu_{app}$ de la mousse selon une formule du type :

$$\mu_{app} = \frac{k \nabla P}{u_t}$$

où $\nabla P = \dfrac{\Delta P}{L}$ est le gradient de pression mesuré en régime permanent d'écoulement au travers de l'échantillon de milieu poreux pour une valeur donnée de la qualité de la mousse $f_g$, L est la longueur de l'échantillon de roche considéré, $\Delta P$ est la perte de charge mesurée entre l'amont et l'aval de cet échantillon pour la valeur considérée de la qualité de la mousse $f_g$, $u_t$ est la vitesse totale (gaz + solution) et $k$ est la perméabilité de l'échantillon de roche prélevé.

## 2. Détermination de la saturation en eau en fonction de la qualité de mousse

Au cours de cette étape, il s'agit de déterminer une valeur de saturation en eau pour chaque valeur de la qualité de la mousse pour laquelle une mesure de la viscosité apparente a été réalisée (cf. étape précédente). Cette étape requiert de disposer de mesures de perméabilités relatives à la phase aqueuse $k_{rw}(S_w)$, lesquelles sont invariantes que la mousse soit présente ou absente. Il est bien connu que ces mesures se répartissent le long d'une courbe dite courbe dite de perméabilité relative. Selon un mode de mise en oeuvre de l'invention, au lieu de réaliser des mesures de perméabilité relative afin de déterminer une courbe de perméabilité relative, on utilise des courbes déjà pré-établies, telles que les courbes définies analytiquement (par des fonctions puissance) dans le document (Lotfollahi et al., 2016).

Selon l'invention, on détermine la saturation en eau $S_w$ du milieu poreux en régime permanent d'écoulement de mousse par inversion de la courbe $k_{rw}(S_w)$. Ainsi, selon ce mode de mise en oeuvre, on détermine la saturation en eau $S_w$ selon une formule du type :

$$S_w = k_{rw}^{-1} \left( \frac{(1 - f_g) \mu_w}{\mu_{app}} \right) \qquad (8)$$

Selon un mode de mise en oeuvre de l'invention, les courbes de perméabilité relative sont représentées analytiquement par des fonctions puissances de la saturation normée. La courbe de perméabilité relative à l'eau peut par exemple s'écrire sous la forme :

$$k_{rw}(\overline{S_w}) = k_{rw\,max}\,\overline{S_w}^{\alpha_w} \tag{9}$$

où $\overline{S_w}$ est la saturation en eau normée entre 0 et 1 définie par $\overline{S_w} = \dfrac{S_w - S_{wi}}{1 - S_{wi} - S_{gr}}$, où $S_{wi}$ et $S_{gr}$ sont les saturations minimales respectivement en eau et en gaz, $\alpha_w$ est l'exposant de perméabilité relative à l'eau, et $k_{rw\,max}$ est la valeur maximale de la perméabilité relative à l'eau. De manière analogue, à titre d'exemple, la courbe de perméabilité relative au gaz $k_{rg}$ peut s'écrire en fonction de $\overline{S_w}$, soit :

$$k_{rg}(\overline{S_w}) = k_{rg\,max}\left(1 - \overline{S_w}\right)^{\alpha_g} \tag{10}$$

où $k_{rg\,max}$ est la valeur maximale de la perméabilité relative au gaz. On peut alors en déduire la saturation en eau normée selon une formule du type :

$$\overline{S_w} = \left(\frac{f_w \mu_w}{k_{rw\,max}\mu_{app}}\right)^{\frac{1}{\alpha_w}} \tag{11}$$

où $f_w = 1 - f_g$, $\mu_w$ est la viscosité de l'eau, et $\mu_{app}$ est la viscosité apparente, telle que déterminée à l'étape précédente, pour une valeur donnée de la qualité de la mousse $f_g$. On peut alors obtenir les saturations en eau et en gaz pour chaque valeur de la qualité de la mousse $f_g$ selon des formules du type :

$$S_w = S_{wi} + (1 - S_{wi} - S_{gr})\overline{S_w} \tag{12}$$

$$S_g = 1 - S_w. \tag{13}$$

Ainsi, à l'issue de cette étape, on obtient au moins une valeur de saturation en eau pour chaque valeur de qualité de la mousse.

### 3. Détermination de la densité de bulles

Au cours de cette étape, à partir d'un modèle à lamelles fonction de la saturation en eau, et des mesures de perméabilité relatives à la phase aqueuse et au gaz, on détermine une densité de lamelles (ou texture) pour chacune des valeurs de la qualité de la mousse. Les modèles à lamelles prédisent les effets de la mousse en termes de réduction de mobilité et décrivent également les mécanismes de génération et distribution des lamelles au sein des milieux poreux. Notamment, la texture est une grandeur physique représentative de la capacité de la mousse à réduire la mobilité du gaz.

Selon un mode de mise en oeuvre de l'invention, le modèle à lamelles consiste en une loi d'évolution de la viscosité du gaz $\mu_g$ s'écoulant sous forme de mousse en fonction de la densité de lamelles (ou texture de mousse) $n_f$ de la forme :

$$\mu_g^{fo} = \mu_g + \frac{C_f\,n_f}{v_g^{1/3}} \tag{14}$$

où $v_g$ est la vitesse locale ou interstitielle (intra-pores) de la phase gazeuse sous forme discontinue au sein de la mousse, $\mu_g$ la vitesse de la phase gazeuse sous forme continue, et $C_f$ une constante pour le système roche-fluides considéré. Cette loi rhéologique du gaz s'écoulant sous forme de bulles est notamment décrite dans les documents (Bretherton, 1961) et (Hirasaki and Lawson, 1985) qui concernent les écoulements d'une ou plusieurs bulles au sein de tubes capillaires.

Un tel modèle à lamelles permet de relier la saturation (paramètre caractéristique de l'écoulement polyphasique en milieu poreux) à la texture (paramètre caractéristique de la mousse). La relation entre ces paramètres caractéristiques s'obtient par écriture du rapport des débits de filtration des deux phases, soit, sachant que $u_g = f_g u_t$ et $u_w = (1- f_g)u_t$ :

$$\frac{u_g}{u_w} = \frac{f_g}{1-f_g} = \frac{k_{rg}(\overline{S_w})}{k_{rw}(\overline{S_w})}\frac{\mu_w}{\mu_g^{fo}} = \frac{k_{rg}(\overline{S_w})}{k_{rw}(\overline{S_w})}\frac{\mu_w}{\mu_g + \dfrac{C_f n_f}{v_g^{1/3}}} \qquad (15)$$

Selon un mode de mise en oeuvre de l'invention selon lequel les courbes de perméabilité relative sont modélisées comme des fonctions puissances de la saturation normée tel que décrit aux équations (9) et (10), on peut réécrire l'équation (15) de la manière suivante :

$$\frac{u_g}{u_w} = \frac{f_g}{1-f_g} = \frac{k_{rg\,max}\left(1-\overline{S_w}\right)^{\alpha_g}}{k_{rw\,max}\,\overline{S_w}^{\alpha_w}}\frac{\mu_w}{\mu_g + \dfrac{C_f n_f \left(\phi S_g\right)^{1/3}}{u_g^{1/3}}} \qquad (16)$$

Puis, de l'équation (16), on en déduit :

$$C_f n_f = \left[\frac{1-f_g}{f_g}\frac{k_{rg\,max}\left(1-\overline{S_w}\right)^{\alpha_g}}{k_{rw\,max}\,\overline{S_w}^{\alpha_w}}\mu_w - \mu_g\right]\left(\frac{f_g u_t}{\phi S_g}\right)^{1/3} \qquad (17),$$

avec

$$S_g = 1 - S_w .$$

On obtient ainsi une expression de la texture $n_f$ qui dépend de la saturation en eau. De cette manière, pour toute valeur de la qualité de la mousse, on peut attribuer une valeur de la texture $n_f$ (à la valeur de la constante $C_f$ près) en fonction d'une unique valeur de saturation. Ainsi, cette étape aboutit à la transcription de l'information expérimentale en une loi reliant le nombre de lamelles $n_f$ et la saturation en eau $S_w$ déduite des mesures d'écoulement de la mousse considérée dans le milieu poreux considéré pour différentes valeurs de la qualité de la mousse.

Selon une mise en oeuvre de l'invention, on détermine en outre une texture $\overline{n_f}$ normée, soit $\overline{n_f} = \dfrac{n_f}{n_{f\,max}}$, ce qui peut aussi s'écrire de la manière suivante :

$$\overline{n_f} = \frac{C_f n_f}{\underset{i=1,n}{Max}\left(C_f n_f\right)_i} \qquad (18)$$

Les valeurs $(C_f n_f)_i$ $i=1, 2,..., n$ ($n$ = nombre de valeurs de qualité de la mousse) sont calculées comme explicité à l'étape précédente. $C_f$ est une constante qu'on peut estimer à partir de la valeur maximale du produit $C_f n_f$, égal à $C_f n_{f\,max}$, où $n_{f\,max}$ est la texture maximale estimée comme l'inverse du volume caractéristique des bulles de mousse, lequel volume est calculé à partir du rayon caractéristique de seuil entre pores du milieu étudié. Ce rayon de seuil peut être formulé comme $\sqrt{\dfrac{8k}{\phi}}$ selon la représentation simplifiée d'un milieu poreux de porosité $\phi$ et de perméabilité k comme un assemblage de capillaires.

**4. Détermination des paramètres du modèle de déplacement de la mousse**

Au cours de cette étape, il s'agit, à partir du modèle à lamelles tel que décrit à l'étape précédente et des mesures de perméabilité relatives au gaz et à la phase aqueuse, de déterminer les paramètres d'un modèle de déplacement de la mousse fonction d'au moins un facteur de réduction de mobilité du gaz optimal et d'une fonction d'interpolation du facteur de réduction de mobilité optimal relative à la saturation en eau (cf les équations (1), (2), (3) et (4)).

Selon un mode de mise en oeuvre de l'invention dans lequel la fonction d'interpolation du modèle de déplacement de la mousse relative à la saturation en eau s'écrit selon l'équation (4), on détermine les paramètres du modèle de déplacement de la manière suivante :

**[0054]** - **Détermination de** $S_w^*$ :

Comme établi à l'étape précédente, la texture est uniquement fonction de la saturation en eau. Par ailleurs, d'un point de vue physique, il est bien connu qu'il existe une saturation critique en eau $S_w^*$ en-deçà de laquelle les bulles de mousse fusionnent (coalescent), c'est-à-dire que la texture normée chute rapidement de 1 à 0.

Selon une mise en oeuvre de l'invention, on définit la saturation critique $S_w^*$ par la saturation en eau pour une texture normée égale à 0.5 (valeur médiane de texture normée), soit :

$$S_w^* = \overline{n_f}^{-1}(0.5) \qquad\qquad (19)$$

où $\overline{n_f}^{-1}$ est l'inverse de la texture normée $\overline{n_f}$ (cf. étape précédente).

Ainsi, la constante $S_w^*$, intervenant dans l'équation de la fonction d'interpolation $F_2$ telle que définie à l'équation (4), peut être déterminée directement à partir de la texture $n_f$, elle-même déterminée directement à partir de mesures expérimentales (cf. étapes 1 et 2 décrites précédemment).

• **Détermination de** $\theta_w$

La constante $\theta_w$ qui apparaît dans l'expression de la fonction d'interpolation $F_2$ telle que décrite à l'équation (4), permet de retranscrire la transition plus ou moins rapide de la texture normée de 0 à 1 lorsque la saturation en eau augmente (ou encore lorsque la saturation en gaz diminue). Par ailleurs, d'un point de vue physique, on peut observer que la mousse disparaît, i.e. que la texture normée $\overline{n_f}$ s'annule, pour une saturation en eau $S_{w\min}$ inférieure à la saturation critique $S_w^*$, mais toutefois dans le voisinage de la saturation critique $S_w^*$.

Par ailleurs, les données expérimentales permettent de déterminer une fonction représentative de la texture $n_f$ (à une constante multiplicative près) et la saturation correspondante pour diverses valeurs de la qualité de la mousse $f_g$. Toutefois, des mesures à très haute qualité telles que la texture $n_f$ tende vers 0 ne sont pas accessibles (ou fiables).

Selon une mise en oeuvre de l'invention, on définit la constante $\theta_w$ selon une formule du type :

$$\theta_w \geq \frac{10}{S_{wopt} - S_w^*}. \qquad\qquad (20)$$

où $S_{wopt}$ est la saturation en eau qui maximise la viscosité apparente (ou la texture) de la mousse, et au-delà de laquelle cette dernière décroît jusqu'à rejoindre la viscosité de la phase gaz continue (correspondant à $nf=0$).

De manière préférée, on définit la constante $\theta_w$ comme comprise dans l'intervalle suivant :

$$\frac{10}{S_{wopt} - S_w^*} \leq \theta_w \leq \frac{100}{S_{wopt} - S_w^*} \tag{21}$$

· **Détermination du facteur de réduction de mobilité optimal** $M_{\mathrm{mod}}^{opt}$

D'un point de vue physique, la mobilité du gaz décroît lorsque la qualité de la mousse croît entre une valeur minimale et une valeur $f_g^{opt}$, dite qualité de la mousse optimale, au-delà de laquelle la mousse se dégrade.

Selon une mise en oeuvre de l'invention dans laquelle le modèle à lamelles est défini selon l'équation (14), on peut montrer que le facteur de réduction de mobilité du gaz s'exprime selon une formule du type :

$$M_{\mathrm{mod}}^{opt} = 1 + \frac{C_f\, n_{f\,\max}}{\mu_g \left(v_g^{\min}\right)^{1/3}} \tag{22}$$

Cette expression du facteur de réduction de mobilité optimal (i.e. maximal) est conforme à la physique, à savoir que celle-ci est maximisée pour une densité de lamelles (ou texture de mousse) égale à la densité maximale $n_{fmax}$ et la vitesse minimale à laquelle une telle mousse peut être générée.

Ainsi, à l'issue de cette étape, on dispose de valeurs des paramètres intervenant dans un modèle de déplacement de la mousse fonction d'un facteur de réduction de mobilité du gaz optimal et d'au moins une fonction d'interpolation du facteur de réduction de mobilité optimal relative à la saturation en eau.

Selon une mise en oeuvre de l'invention dans lequel le modèle de déplacement de la mousse fait intervenir au moins une autre fonction d'interpolation $F_k$ que celle dépendant de la saturation en eau, on réitère les étapes 1 à 3 telles que décrites ci-dessus pour différentes valeurs du paramètre $V_k$ d'une fonction d'interpolation $F_k$, et on détermine les constantes propres à cette autre fonction d'interpolation, à partir du facteur de réduction de mobilité optimal tel que déterminé à l'issue de l'étape 4 décrite ci-dessus et d'un facteur de réduction de mobilité relatif à la fonction d'interpolation considérée. Selon une mise en oeuvre de l'invention, le facteur de réduction de mobilité optimal $M_{\mathrm{mod}}^{k}$ associé au paramètre $V_k$ d'une fonction d'interpolation $F_k$ peut s'écrire selon une formule du type :

$$F_k(V_k) = \frac{M_{\mathrm{mod}}^{k} - 1}{M_{\mathrm{mod}}^{opt} - 1} \tag{23}$$

où $M_{\mathrm{mod}}^{opt}$ est le facteur de réduction de mobilité optimal déterminé à l'issue de l'étape 4 telle que décrite ci-dessus.

A titre d'illustration, la détermination des constantes de la fonction $F_1$ telle que décrite à l'équation (5), relative à la concentration en agent moussant de la mousse, peut être déclinée de la manière suivante :

-    on définit une pluralité de valeurs $C_s^w$ de concentration de l'agent moussant dans la phase aqueuse constitutive de la mousse étudiée. Selon une mise en oeuvre de l'invention, on définit une valeur maximale $C_s^{w-ref}$ (par exemple au-delà de laquelle le procédé n'est manifestement plus économique) et un nombre prédéterminé de valeurs intermédiaires entre 0 et cette valeur maximale ;

-    pour chacune des valeurs de concentration ainsi choisies, on réitère les mesures de viscosité apparente de la mousse en fonction de la qualité de la mousse comme décrit à l'étape 1, c'est-à-dire que l'on réalise des injections à débit total fixé et à concentration fixée pour différentes valeurs de la qualité de la mousse ;

-    on applique ensuite les étapes 2 et 3 telles que décrites ci-dessus aux mesures de viscosité apparente ainsi obtenues, c'est-à-dire que l'on détermine les saturations en eau en fonction de la qualité de la mousse tel que décrit à l'étape 2 ci-dessus, puis les densités de bulles correspondantes, par exemple en calculant les valeurs de $C_f n_f$ en fonction de la qualité $f_g$ tel que décrit à l'étape 3 ci-dessus. Sachant que la valeur de la texture maximale $n_{f\max}$ est invariante pour un milieu poreux donné, la valeur maximale du produit $C_f n_f$ permet de déterminer une nouvelle valeur de $C_f$ qui traduit l'impact de la concentration sur la performance de la mousse.

- on détermine ensuite, par exemple au moyen de l'équation (22), un facteur de réduction de mobilité $M^1_{\text{mod}}$ associé à la fonction d'interpolation $F_1$ pour chacune des valeurs de concentration en agent moussant $C^w_s$. A partir des valeurs de $M^1_{\text{mod}}$ pour les différentes valeurs de concentration en agent moussant $C^w_s$ et du facteur de réduction de mobilité optimal $M^{opt}_{\text{mod}}$ tel que déterminé à l'issue de l'étape 4, on détermine alors l'exposant $e_s$ permettant de calibrer au mieux la courbe décrite par une formule du type (et déduite directement des équations (23) et (5)) :

$$M_{\text{mod}} - 1 = \left( M^{opt}_{\text{mod}} - 1 \right) * \left( \frac{Min(C^w_s, C^{w-ref}_s)}{C^{w-ref}_s} \right)^{e_s} \qquad (24)$$

Selon une mise en oeuvre de l'invention selon laquelle le modèle de déplacement de la mousse fait intervenir au moins deux autres fonctions d'interpolation que celle dépendant de la saturation en eau, on procède à la détermination des constantes associées à ces autres fonctions d'interpolation tel que décrit ci-dessus, de manière séquentielle, fonction d'interpolation par fonction d'interpolation.

## 5. Exploitation des hydrocarbures de la formation

Au cours de cette étape, il s'agit de déterminer au moins un schéma d'exploitation des hydrocarbures contenus dans la formation. De manière générale, un schéma d'exploitation comprend un nombre, une géométrie et une implantation (position et espacement) des puits injecteurs et producteurs. Mais un schéma d'exploitation des hydrocarbures comprend également la définition d'un type de récupération assistée. Dans le cas d'une récupération assistée des hydrocarbures par injection d'un gaz sous forme de mousse, le schéma d'exploitation peut également être défini par un type de gaz injecté dans la formation étudiée et/ou par le type d'agent moussant adjoint à ce gaz, par la quantité d'agent moussant etc. Un schéma d'exploitation d'un réservoir d'hydrocarbures doit par exemple permettre un fort taux de récupération des hydrocarbures piégés dans le réservoir géologique, sur une longue durée d'exploitation, et nécessitant un nombre de puits limité.

Selon l'invention, la détermination du schéma d'exploitation des hydrocarbures de la formation est réalisée à l'aide d'une simulation d'écoulement exploitant le modèle de déplacement de la mousse établi au cours des étapes précédentes. Un exemple de simulateur d'écoulement (aussi appelé simulateur de réservoir) permettant la prise en compte d'un modèle de déplacement de la mousse est le logiciel PumaFlow (IFP Energies nouvelles, France). Selon l'invention, à tout instant t de la simulation, le simulateur d'écoulement résout l'ensemble des équations d'écoulement propres à chaque maille et délivre des valeurs solutions des inconnues (saturations, pressions, concentrations, température,...) prédites à cet instant t. De cette résolution, découle la connaissance des quantités d'huile produites et de l'état du gisement (distribution des pressions, saturations, etc...) à l'instant considéré. Selon un mode de mise en oeuvre de l'invention, on définit différents schémas d'exploitation du fluide de la formation étudiée et on estime, à l'aide du simulateur d'écoulement intégrant le modèle de déplacement de la mousse déterminé à l'issue de l'étape 3, par exemple la quantité d'hydrocarbures produit selon chacun des différents schémas d'exploitation, la courbe représentative de l'évolution de la production dans le temps au niveau de chacun des puits etc.

Puis, une fois le schéma d'exploitation défini, les hydrocarbures piégés dans la formation sont exploités en fonction de ce schéma d'exploitation, notamment en forant les puits injecteurs et producteurs du schéma d'exploitation ainsi déterminés, de manière à produire les hydrocarbures, et en installant les infrastructures de production nécessaires au développement du gisement.

Il est bien entendu que le schéma d'exploitation peut être évolutif sur la durée d'une exploitation d'un réservoir géologique, en fonction des connaissances relatives au réservoir acquises pendant l'exploitation, des améliorations dans les différents domaines techniques intervenant lors d'une exploitation d'un gisement d'hydrocarbures (améliorations dans le domaine du forage, de la récupération assistée par exemple).

## Exemple de réalisation

Les caractéristiques et avantages du procédé selon l'invention apparaîtront plus clairement à la lecture de l'exemple d'application ci-après.

Plus précisément, la présente invention a été appliquée aux mesures de l'un des essais décrits dans le document (Alvarez et al., 2001). L'essai a été réalisé sur une roche gréseuse, représentative d'un réservoir dans laquelle des hydrocarbures seraient piégés et dont on a prélevé des échantillons par carottage.

La récupération assistée des hydrocarbures liquides d'un tel réservoir est simulée expérimentalement par déplacement d'un gaz (de l'azote dans le cas présent) injecté sous forme de mousse constituée par mélange de ce gaz avec une phase aqueuse renfermant un agent moussant (tensio-actif anionique dans le cas présent) à la concentration de 1% poids.

Pour cet exemple de mise en oeuvre, on a recours à des fonctions analytiques de perméabilités relatives au gaz et à l'eau prédéterminées pour ce type de roche (en l'espèce un grès) et décrites dans la littérature, comme par exemple dans le document (Lotfollahi et al., 2016).

Les caractéristiques du système roche-fluide-mousse relatif à ces mesures sont présentées dans le Tableau 1.

Tableau 1

| | |
|---|---|
| Porosité (%) | 0,18 |
| Perméabilité (mD) | 530 |
| Viscosité du gaz $\mu_g$ (1 mPa·s.) | 0,02 |
| Viscosité de l'eau $\mu_w$ (1 mPa·s.) | 0,7 |
| Perméabilité relative au gaz maximale $k_{rgmax}$ | 0,94 |
| Perméabilité relative à l'eau maximale $k_{rwmax}$ | 0,2 |
| Exposant $_w$ de la courbe $k_{rw}$ | 4,2 |
| Exposant $_g$ de la courbe $k_{rg}$ | 1,3 |
| *Saturation en eau minimale $S_{wi}$* | 0,2 |
| *Saturation en gaz minimale $S_{gr}$* | 0,2 |
| Rayon de bulle de mousse estimé $\sqrt{\dfrac{8k}{\phi}}$ (m) | 4,82176E-06 |
| *Texture maximale $n_{fmax}$ ($m^{-3}$)* | 2,12958E+15 |
| Vitesse d'écoulement gaz+ solution $u_t$ (m/s) | 8,81944E-06 |

Des mesures de pertes de charge à vitesse totale $u_t$ fixée, telles que décrites à l'étape 1 de la présente invention, sont réalisées pour des valeurs de la qualité de mousse variant entre 0.25 et 0.90. Des valeurs de viscosité apparente sont déterminées à partir de ces mesures de perte de charge pour chacune des valeurs de qualité de la mousse. Ces valeurs de viscosité apparente sont présentées dans les deux premières lignes du Tableau 2.

Tableau 2

| $f_g$ | 0,25 | 0,30 | 0,37 | 0,45 | 0,50 | 0,60 | 0,67 | 0,76 | 0,80 | 0,86 | 0,90 |
|---|---|---|---|---|---|---|---|---|---|---|---|
| $\mu_{a\rho\rho}$, cp | 550 | 600 | 660 | 730 | 760 | 830 | 870 | 920 | 800 | 600 | 400 |
| $S_w$ | 0,368 | 0,362 | 0,354 | 0,346 | 0,341 | 0,331 | 0,324 | 0,313 | 0,312 | 0,310 | 0,312 |
| $C_f n_f$, Pa.s.(m/s)$^{1/3}$ | 0,0362 | 0,0355 | 0,0346 | 0,0343 | 0,0336 | 0,0333 | 0,0330 | 0,0328 | 0,0276 | 0,0198 | 0,0128 |
| $n_f/n_{fmax}$ | 1,000 | 0,981 | 0,955 | 0,946 | 0,928 | 0,919 | 0,910 | 0,905 | 0,763 | 0,547 | 0,353 |

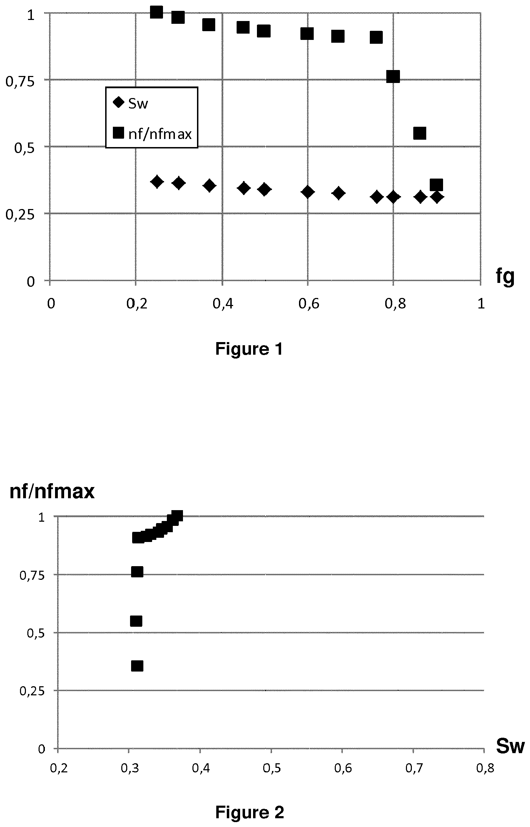

A partir de ces valeurs de viscosité apparente, on détermine la saturation en eau Sw ainsi que la texture pour chacune des valeurs de qualité de la mousse, en procédant de la manière décrite dans les étapes 2 et 3 de la présente invention. Les résultats de ces étapes sont présentés dans les trois dernières lignes du Tableau 2, ainsi que dans les Figures 1 et 2. Notamment la Figure 1 présente l'évolution de la saturation (Sw) et l'évolution de la texture normée (nf/nfmax) en fonction de la qualité de la mousse (fg). La Figure 2 présente quant à elle l'évolution de la texture normée (nf/nfmax) en fonction de la saturation en eau (Sw).

On observe ainsi que la texture de la mousse demeure quasi-constante sur un grand intervalle de qualité allant de 0.25 à 0.75 environ, et qu'au-delà, pour des qualités supérieures allant de 0.76 à 0.9, la texture de la mousse décroît rapidement, ce que traduit effectivement la décroissance de la viscosité apparente de la mousse de 920 à 400 cp. La qualité de mousse $f_{gopt}$ qui maximise la viscosité apparente de la mousse est donc égale à 0.76 dans le cas présent. Parallèlement, on constate que la saturation en eau varie peu sur tout l'intervalle de qualité de mousse exploré par ces mesures. La Figure 2 montre ainsi de manière complémentaire à la Figure 1 que la texture de la mousse peut varier considérablement sans que la saturation en eau du milieu poreux soit considérablement modifiée.

Ces résultats illustrent le fait que la réduction de mobilité du gaz injecté sous forme de mousse (réduction de mobilité mesurée par la viscosité apparente) est reliée de manière beaucoup plus sensible à la texture de la mousse (nombre de bulles ou de lamelles) qu'à la saturation du milieu poreux : en d'autres termes, la performance d'une mousse en milieu poreux est plus facilement modélisée (i.e. la calibration du modèle plus aisée) via la variable intermédiaire de texture que via la seule variable de saturation. L'avantage de l'usage d'un modèle à lamelles comme intermédiaire pour calibrer les modèles de déplacement de mousse à partir de données expérimentales est ainsi démontré.

A partir des valeurs de texture ainsi déterminées, on détermine, tel que décrit précédemment à l'étape 4, les valeurs des paramètres intervenant dans le modèle de déplacement de la mousse fonction d'au moins un facteur de réduction de mobilité du gaz optimal et d'une fonction d'interpolation du facteur de réduction de mobilité optimal relative à la saturation en eau (cf équations (1), (2), (3) et (4)). Les valeurs de ces paramètres sont les suivantes :

- facteur de réduction de mobilité au gaz optimal $M_{\mathrm{mod}}^{opt}$ : 67500 ;

- saturation critique $S_{w}^{*}$ : 0.31

- constante $\theta_w$ : supérieure ou égale à 10/(0.368-0.310)= 175, et de manière préférée comprise entre 10/(0.368-0.310)= 175 et 100/(0.368-0.310)= 1750.

La valeur de $S_w^*$ ainsi obtenue, à partir de mesures de viscosité apparente et d'un modèle physique de type modèle à lamelles, est la même que celle obtenue par des ajustements numériques tels que décrits dans le document (Lotfollahi et al. 2016). La valeur déterminée pour le facteur de réduction de mobilité $M_{\mathrm{mod}}^{opt}$ est également du même ordre de grandeur que celles obtenues par ajustement numérique (par méthode de moindres carrés itérative) des modèles de mousse d'autres simulateurs connus, tels que UT et STARS référencés par Lotfollahi et al. (2016) à propos de la modélisation de ces mêmes essais.

Ainsi le procédé selon l'invention permet une paramétrisation d'un modèle de déplacement de la mousse à partir de données expérimentales interprétées selon un modèle représentatif de la physique de la mousse (assemblage de bulles). L'usage d'un modèle physique à lamelles en tant qu'intermédiaire pour calibrer le modèle de mousse permet d'assurer une calibration du modèle de déplacement de la mousse valide sur le plan physique.

## Revendications

**1.** Procédé d'exploitation d'une formation souterraine comportant des hydrocarbures, au moyen d'une injection d'une solution aqueuse comprenant un gaz sous forme de mousse et d'un simulateur d'écoulement reposant sur un modèle de déplacement dudit gaz sous forme de mousse, ledit modèle de déplacement étant fonction d'un facteur de réduction de mobilité dudit gaz optimal et d'au moins une fonction d'interpolation dudit facteur de réduction de mobilité optimal, ladite fonction d'interpolation étant fonction au moins de la saturation en eau et d'au moins une constante, **caractérisé en ce que**, à partir d'au moins un échantillon de ladite formation, et de mesures de perméabilité relative conventionnelle à la phase aqueuse et de mesures de perméabilité relative conventionnelle au gaz :

A. on détermine au moins ledit facteur de réduction de mobilité dudit gaz optimal et ladite constante de ladite fonction d'interpolation selon au moins les étapes suivantes :

i. on réalise une injection à vitesse totale constante dans ledit échantillon dudit gaz sous forme de mousse pour pluralité de valeurs de la qualité de la mousse, et on mesure une viscosité apparente pour chacune desdites valeurs de la qualité de la mousse ;

ii. à partir desdites mesures de perméabilités relatives conventionnelles et desdites mesures de viscosité apparente pour la pluralité de valeurs de la qualité de la mousse, on détermine une saturation en eau pour chacune desdites valeurs de la qualité de la mousse ;

iii. à partir d'un modèle à lamelles fonction de ladite saturation en eau et desdites mesures de perméabilité relative conventionnelle au gaz et à ladite phase aqueuse, on détermine une valeur de la texture de la mousse pour chacune desdites valeurs la qualité de la mousse ;

iv. à partir desdites valeurs de texture, on détermine au moins ledit facteur de réduction de mobilité dudit gaz optimal et ladite constante de ladite fonction d'interpolation dudit facteur de réduction de mobilité optimal ;

B. à partir dudit modèle de déplacement et dudit simulateur d'écoulement, on détermine un schéma d'exploitation optimal dudit gisement et on exploite lesdits hydrocarbures.

2. Procédé selon la revendication 1, dans lequel on détermine ladite viscosité apparente relative à une valeur de la qualité de la mousse à partir d'une mesure de perte de charge dans ledit échantillon pour ladite valeur de la qualité de la mousse.

3. Procédé selon l'une des revendications précédentes, dans lequel ledit modèle à lamelles consiste en une fonction reliant la texture de la mousse $n_f$ à la saturation en eau $S_w$ selon une formule du type :

$$C_f\, n_f = \left[ \frac{1-f_g}{f_g} \frac{k_{rg\,\max}\left(1-\overline{S_w}\right)^{\alpha_g}}{k_{rw\,\max}\,\overline{S_w}^{\alpha_w}} \mu_w - \mu_g \right]\left( \frac{f_g\, u_t}{\phi S_g} \right)^{1/3}$$

où $f_g$ est la qualité de la mousse, $\mu_w$ la viscosité de la phase aqueuse, $\mu_g$ la vitesse de la phase gazeuse sous forme continue, $u_t$ est la vitesse totale du gaz et de la solution, $C_f$ une constante pour le système roche-fluides considéré, $k_{rw\max}$ est la valeur maximale de la perméabilité relative à l'eau, $k_{rg\max}$ est la valeur maximale de la perméabilité relative au gaz, $S_g$ est la saturation en gaz, $\phi$ est la porosité, $\alpha_w$ est l'exposant de la fonction puissance représentative desdites mesures de perméabilité relative à l'eau, et $\alpha_g$ est l'exposant de la fonction puissance représentative desdites mesures de perméabilité relative au gaz, et $\overline{S_w}$ est la saturation en eau normée.

4. Procédé selon l'une des revendications précédentes, dans lequel ledit modèle de déplacement de la mousse est en sus fonction d'au moins une fonction d'interpolation $F_k$ dépendant d'un paramètre $V_k$ différent de la saturation en eau, et dans lequel préalablement à l'étape B) et pour chacune desdites fonctions d'interpolation $F_k$, on réitère les étapes i) à iii) pour différentes valeurs du paramètre $V_k$ de ladite fonction d'interpolation $F_k$, et on détermine les constantes relatives à ladite fonction d'interpolation $F_k$ à partir dudit facteur de réduction de mobilité optimal et d'un facteur de réduction de mobilité relatif à ladite fonction d'interpolation $F_k$.

5. Procédé selon la revendication 4, dans lequel ledit paramètre $V_k$ est choisi parmi une concentration en agent moussant, une saturation en huile, et un débit de gaz.

6. Procédé selon l'une des revendications 4 à 5, dans lequel ledit facteur de réduction de mobilité $M_{\mathrm{mod}}^{k}$ relatif à la fonction $F_k$ s'écrit selon une formule du type :

$$F_k(V_k) = \frac{M_{\mathrm{mod}}^{k} - 1}{M_{\mathrm{mod}}^{opt} - 1}$$

où $M_{\mathrm{mod}}^{opt}$ est ledit facteur de réduction de mobilité optimal.

**Figure 1**

**Figure 2**

Europäisches
Patentamt

European
Patent Office

Office européen
des brevets

**RAPPORT DE RECHERCHE EUROPEENNE**

Numéro de la demande

EP 18 30 5032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DHOLKAWALA ET AL: "Application of fractional flow theory to foams in porous media", JOURNAL OF PETROLEUM SCIENCE AND ENGINEERING, ELSEVIER, AMSTERDAM, NL, vol. 57, no. 1-2, 1 mai 2007 (2007-05-01), pages 152-165, XP022079603, ISSN: 0920-4105, DOI: 10.1016/J.PETROL.2005.10.012 * abrégé * * page 152, alinéa 1 * * page 154, lignes 3-9, 44-48, 70-71, alinéa 1 * * page 155, alinéa 1 * * pages 155-157, alinéa 2 * * page 157, alinéa 3 * * page 164, alinéa 4.4 * ----- | 1-6 | INV. E21B41/00 E21B43/16 E21B43/20 |
| X | AFSHARPOOR A ET AL: "Mechanistic simulation of continuous gas injection period during surfactant-alternating-gas (SAG) processes using foam catastrophe theory", CHEMICAL ENGINEERING SCIENCE, OXFORD, GB, vol. 65, no. 11, 1 juin 2010 (2010-06-01), pages 3615-3631, XP027027674, ISSN: 0009-2509 [extrait le 2010-03-15] * abrégé * * pages 3617-18, alinéa 2 * * page 3629, lignes 15-26, alinéa 3.7 * * page 3630, alinéas 4.3, 4.4 * ----- -/-- | 1-6 | DOMAINES TECHNIQUES RECHERCHES (IPC) E21B C09K |

Le présent rapport a été établi pour toutes les revendications

| Lieu de la recherche | Date d'achèvement de la recherche | Examinateur |
|---|---|---|
| La Haye | 24 mai 2018 | Pasquini, Matteo |

EPO FORM 1503 03.82 (P04C02)

Europäisches
Patentamt

European
Patent Office

Office européen
des brevets

# RAPPORT DE RECHERCHE EUROPEENNE

Numéro de la demande

EP 18 30 5032

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Energy & Fuels ET AL: "Estimation of parameters for the simulation of foam flow through porous media: Part 1; the dry-out effect", , 3 mai 2013 (2013-05-03), XP055372411, Extrait de l'Internet: URL:https://pubs.acs.org/doi/abs/10.1021/ef302036s [extrait le 2017-05-12] * abrégé * * alinéas [0001], [0002], [0004] * ----- | 1-6 | |
| A | LOTFOLLAHI MOHAMMAD ET AL: "Comparison of implicit-texture and population-balance foam models", JOURNAL OF NATURAL GAS SCIENCE AND ENGINEERING, vol. 31, 9 mars 2016 (2016-03-09), pages 184-197, XP029536511, ISSN: 1875-5100, DOI: 10.1016/J.JNGSE.2016.03.018 * abrégé * * alinéas [2.1.2], [02.2], [0004], [0005] * ----- | 1-6 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 24 mai 2018 | Pasquini, Matteo |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1657393

**Littérature non-brevet citée dans la description**

- **ALVAREZ, J. M. ; RIVAS, H. J. ; ROSSEN, W. R.** Unified Model for Steady-State Foam Behavior at High and Low Foam Qualities. *SPE Journal,* 2001, vol. 6 (3), 325-333
- **BOEIJE, C. S. ; ROSSEN, W. R.** Fitting Foam-Simulation-Model Parameters to Data: I. Coinjection of Gas and Liquid. *SPE Reservoir Evaluation & Engineering,* 2015, vol. 18 (2), 264-272
- **BRETHERTON F. P.** The motion of long bubbles in tubes. *Journal of Fluid Mechanics,* 1961, vol. 10 (2), 166
- Effect of Permeability on Implicit-Texture Foam Model Parameters and the Limiting Capillary Pressure. **FARAJZADEH, R. ; LOTFOLLAHI, M. ; EFTEKHARI, A.A. ; ROSSEN, W.R. ; HIRASAKI, G.J.** Energy & Fuels. ACS Publications, 2015, vol. 29, 3011-3018
- **HIRASAKI, G. J. ; LAWSON J. B.** Mechanisms of foam flow in porous media: apparent viscosity in smooth capillaries. *SPE Journal,* 1985, vol. 25 (2), 176-190

- **KAPETAS, L. ; VINCENT-BONNIEU, S. ; FARAJZADEH, R. ; EFTEKHARI, A.A. ; MOHD-SHAFIAN, S.R. ; KAMARUL BAHRIM, R.Z. ; ROSSEN, W.R.** Effect of Permeability on Foam-Model Parameters - An Integrated Approach from Coreflood Experiments through to Foam Diversion Calculations. *18th European Symposium on IOR,* 14 Avril 2015
- **LOTFOLLAHI, M. ; FARAJZADEH, R. ; DELSHAD, M. ; VARAVEI, A. ; ROSSEN, W. R.** Comparison of Implicit-Texture and Population-Balance Foam Models. *Journal of Natural Gas Science and Engineering,* 2016, vol. 31, 184-197
- Estimation of Parameters for the Simulation of Foam Flow through Porous Media. Part 1: The Dry-Out Effect. **MA, K. ; LOPEZ-SALINAS, J.L. ; PUERTO, M.C. ; MILLER, C.A. ; BISWAL, S.L. ; HIRASAKI, G.J.** Energy & Fuels. ACS Publications, 2013, vol. 27, 2363-2375
- **ZENG, Y. ; MUTHUSWAMY, A. ; MA, K. ; LE, W. ; FARAJZADEH, R. ; PUERTO, M. ; VINCENT-BONNIEU, S. ; EFTEKHARI, A. A. ; WANG, Y. ; DA, C.** Insights on Foam Transport From a Texture-Implicit Local-Equilibrium Model with an Improved Parameter Estimation Algorithm. *Industrial & Engineering Chemistry Research,* 2016, vol. 55 (28), 7819-7829